(19) Europäisches Patentamt

European Patent Office

Office européen des brevets

(11) **EP 1 394 448 A2**

(12) **EUROPEAN PATENT APPLICATION**

(43) Date of publication:
**03.03.2004 Bulletin 2004/10**

(51) Int Cl.⁷: **F16H 61/00**

(21) Application number: **03255242.4**

(22) Date of filing: **22.08.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Kawamura, Yasutaka**<br>  **Fuji-shi, Shizuoka 417-8585 (JP)**<br>• **Kang, Jihoon**<br>  **Fuji-shi, Shizuoka 417-8585 (JP)**<br>• **Doihara, Katsumi**<br>  **Fuji-shi, Shizuoka 417-8585 (JP)** |
| (30) Priority: **30.08.2002 JP 2002255716** | |
| (71) Applicant: **JATCO Ltd**<br>**Fuji-shi, Shizuoka 417-8585 (JP)** | (74) Representative: **Baldwin, Mark et al**<br>**R.G.C. Jenkins & Co,**<br>**26 Caxton Street**<br>**London SW1H 0RJ (GB)** |

(54) **Reverse torque input detection system for V-belt type continuously variable transmission**

(57)     A reverse torque input detection system for a v-belt type continuously variable transmission detects a reverse torque input without using a revolution sensor. The process of detecting a reverse torque input to a V-belt type continuously variable transmission starts at time t2 when a time period for preventing erroneous detection has elapsed subsequent to time t1 when a throttle valve opening was 0/8 and the brake state changed from ON to OFF. The detection process determines the presence of a reverse torque input to a V-belt type continuously variable transmission when primary pressure decreases no less than $\Delta Ppri$ from the hydraulic pressure $Ppri0$ obtained while the brake state was ON and secondary pressure decreases less than $\Delta Psec$ from the hydraulic pressure $Psec0$ obtained while the brake state was ON. The reverse torque input can be detected from the changes of primary pressure and secondary pressure; thereby eliminating the need for a pair of revolution sensors conventionally used and contributing to the cost reduction.

Fig.1

EP 1 394 448 A2

Description

BACKGROUND OF THE INVENTION

Field of the Invention

The present invention relates to a reverse torque input detection system which detects a torque input in reverse direction transferred from an output shaft of a V-belt type continuously variable transmission.

Description of the Prior Art

V-belt type continuously variable transmissions (hereinafter referred to as a "belt-CVT") provided with a V-belt are conventionally used as a continuously variable transmission suitable for vehicles.
In a belt-CVT, a V-belt is placed over a primary pulley and a secondary pulley wherein the groove widths of the primary pulley and the secondary pulley are variably controlled by hydraulic pressure.
The primary pulley and the secondary pulley are provided with a primary cylinder chamber and a secondary cylinder chamber respectively. To the primary cylinder chamber is supplied primary pressure obtained by regulating line pressure, and to the secondary cylinder chamber is supplied secondary pressure obtained by regulating line pressure respectively. The groove widths of the primary pulley and the secondary pulley are changed by hydraulic pressure supplied to the respective cylinder chambers during running of the vehicle, and gear ratio is continuously changed according to a contact radius ratio (pulley ratio) between the V-belt and the respective pulleys.
In this type of a belt-CVT, when a torque is applied to an output shaft in a direction opposite to the output rotation direction of the output shaft, the hydraulic pressure balance between the primary pressure and the secondary pressure is lost, the primary pressure decreases and a torque capacity becomes insufficient. This is the situation when torque in the opposite direction is applied to an output shaft of a belt-CVT as, for example, when a vehicle moves backward from the state in which the vehicle was stopped on an up-hill road.
To detect a reverse rotation of the output shaft, a pair (two) of revolution sensors are installed near the primary pulley and the direction of the rotation transmitted to the output shaft is detected from the order of the pulses read by the revolution sensors.
This type of conventional belt-CVT has a disadvantage from the viewpoint of cost because it requires a pair (two) of revolution sensors to detect the direction of rotation externally applied to the output shaft.

SUMMARY OF THE INVENTION

In view of the aforementioned problem, it is an object of the present invention to provide a reverse torque input detection system for a belt-CVT that detects the direction of torque applied to an output shaft of a belt-CVT without using special revolution sensors.
In the present invention, reverse torque input detection means start the detection process after a throttle opening sensor detected a throttle valve fully closed and a brake sensor detected a brake state change from ON to OFF, and determine the presence of a reverse torque applied to an output shaft of a belt-CVT based on a primary pressure being lower, by a predetermined value, than the primary pressure detected when a brake sensor detected the brake state being ON and a secondary pressure being no lower, by a predetermined value, than the secondary pressure detected when the brake sensor detected the brake state being ON.
According to the present invention, by detecting a reverse torque input applied to a belt-CVT based on the outputs of two hydraulic pressure sensors, i.e., a hydraulic pressure sensor for primary pressure and a hydraulic pressure sensor for secondary pressure which are conventionally installed in a belt-CVT, it is not required to provide a pair (two) of revolution sensors near the primary pulley and near the secondary pulley, respectively. Since only one revolution sensor each is required to be installed near the primary pulley and near the secondary pulley, cost reduction can be achieved.

BRIEF DESCRIPTION OF THE DRAWINGS

FIG. 1 is a block diagram showing a preferred embodiment of the present invention.
FIG. 2 is a flow chart showing the process of reverse torque input detection according to the embodiment of the invention.
FIG. 3 is a timing diagram showing the state of a vehicle on an inclined road.
FIG. 4 is a timing diagram showing the state of a vehicle on a flat road.

DETAILED DESCRIPTION OF THE PREFERRED EMBODIMENT

The preferred embodiment of the present invention is described in the following with reference to the accompanying drawings.

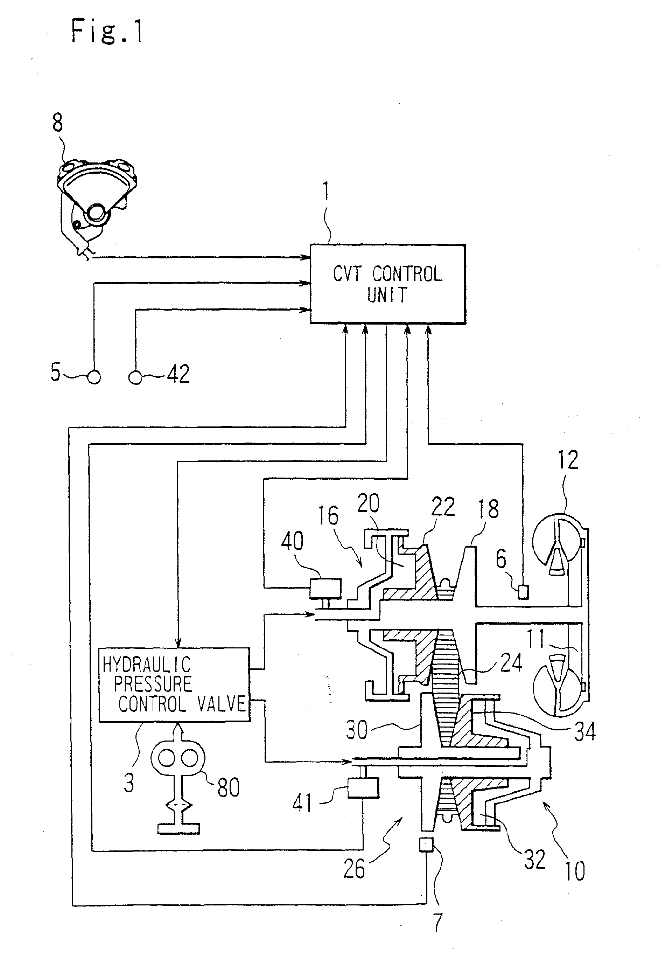

Fig. 1 is a schematic block diagram showing an embodiment in which the present invention is applied to a belt CVT.
A transmission mechanism 10 is, as a pair of pulleys, provided with a primary pulley 16 and a secondary pulley 26, which are connected to each other via a V-belt 24 . The transmission mechanism 10 is connected to an engine not shown in the drawing via a torque converter 12 provided with a lock-up clutch 11.

The primary pulley 16 forms a V-shaped groove with a fixed conical plate 18 which rotates integrally with an output shaft of the torque converter 12 and a movable conical plate 22 so arranged as to oppose the fixed conical plate 18, and is provided with a first cylinder chamber 20 to apply hydraulic pressure on a back surface of the movable conical plate 22 to displace it in an axial direction.

The secondary pulley 26 forms a V-shaped groove with a fixed conical plate 30 which rotates integrally with an output shaft on the side of an axle not shown and a movable conical plate 34 so arranged as to oppose the fixed conical plate 30. The movable conical plate 34 is forced in the direction of narrowing the pulley groove width by a return spring not shown, and is provided with a second cylinder chamber 32 to apply hydraulic pressure on a back surface of the movable conical plate 34 to displace it in an axial direction.

The transmission mechanism 10 is controlled by a hydraulic pressure control valve 3 according to signals from a CVT control unit 1. The hydraulic pressure control valve 3 generates line pressure by regulating oil pressure supplied from a hydraulic pressure pump 80. Also the hydraulic pressure control valve 3 generates a primary pressure by regulating the line pressure to a specific pressure level according to signal from the CVT control unit 1 and supplies the primary pressure to the first cylinder chamber 20. Similarly, the hydraulic pressure control valve 3 generates a secondary pressure by regulating the line pressure to a specific pressure level and supplies the secondary pressure to the second cylinder chamber 32.

The pressure receiving area of the first cylinder chamber 20 is set larger than the pressure receiving area of the second cylinder chamber 32.

For the feedback control of the hydraulic pressure to be supplied to the first cylinder chamber 20 and the second cylinder chamber 32, a primary hydraulic pressure sensor 40 is provided on a hydraulic line connecting to the first cylinder chamber 20 to measure the primary pressure, and a secondary hydraulic pressure sensor 41 is provided on a hydraulic line connecting to the second cylinder chamber 32 to measure the secondary pressure. The measurement results from the primary hydraulic pressure sensor 40 and the secondary hydraulic pressure sensor 41 are inputted into the CVT control unit 1.

The CVT control unit 1 controls the hydraulic pressure control valve 3 based on the engine torque estimated by a throttle valve opening (accelerator pedal position) TVO received from a throttle opening sensor 5 and an engine speed Ne, in addition to a select position signal received from an inhibitor switch 8.

Connected to the CVT control unit 1 are a first rotational speed sensor 6 and a second rotational speed sensor 7 detecting the rotational speed of the primary pulley 16 and the secondary pulley 26 respectively, and the gear ratio of the transmission mechanism 10 is calculated according to the detected signals thereof. Furthermore, a brake switch 42 is connected to the CVT control unit 1 and the CVT control unit 1 detects brake ON and OFF states.

The primary pressure applied to the first cylinder chamber 20 is controlled by the hydraulic pressure control valve 3, thereby the groove width of the primary pulley 16 is changed, while the secondary pressure applied to the second cylinder chamber 32 controls the holding pressure on the V-belt 24; thereby gear shifting is performed and the driving force is transmitted according to the contact-frictional force between the V-belt 24 and each pulley 16 and 26.

When the groove width of the primary pulley 16 is widened to have the pulley ratio Low (low-speed side), wherein the radius of the primary pulley 16 in contact with the V-belt 24 is small and the radius of the secondary pulley 26 in contact with the V-belt 24 is large, the gear ratio increases and reduced engine revolutions are outputted to the axle side. Conversely, when the pulley ratio is Hi (high-speed side), engine speed is outputted at a reduced gear ratio. Between the two states, the gear ratio changes continuously according to the ratio of the radii of the primary pulley 16 and the secondary pulley 26 in contact with the V-belt.

The detection of a reverse torque input to a belt-CVT according to the embodiment of this invention is explained in the following.

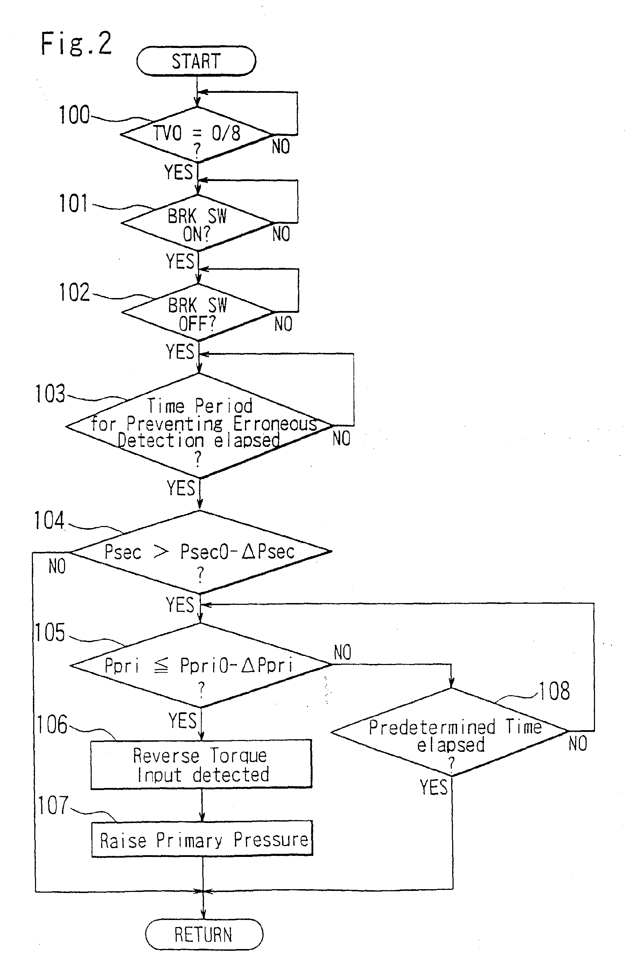

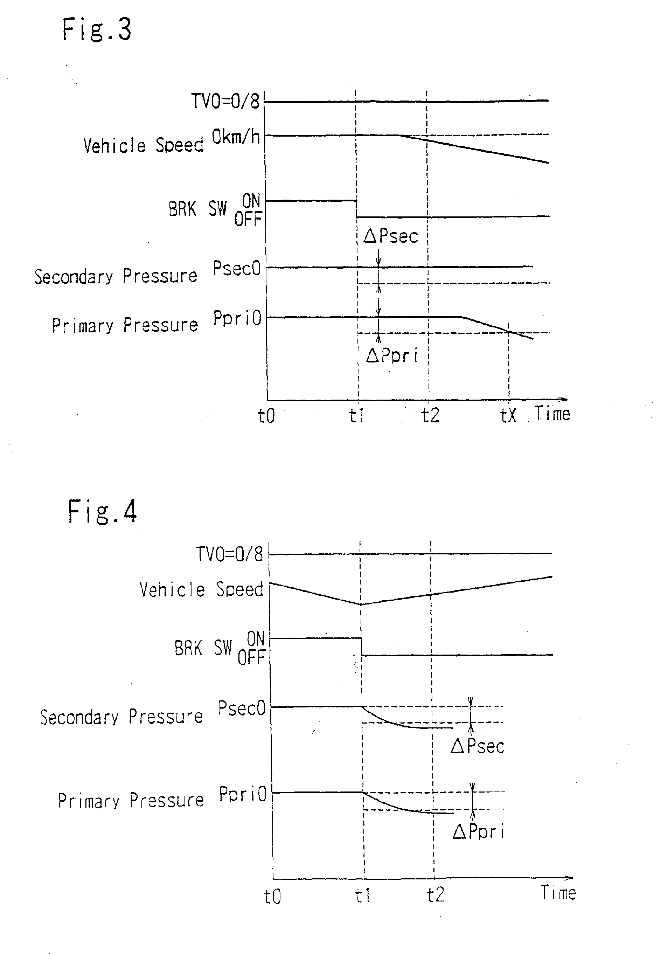

FIG. 2 is a flow chart showing the flow of control performed by the CVT control unit 1 in the detection of a reverse torque input. FIG. 3 is a timing diagram showing the state of a vehicle stopped on an inclined road (up-hill) and the changes of the primary pressure and the secondary pressure.

In a step 100, the CVT control unit 1 determines whether the signal from the throttle opening sensor 5 is 0/8 (throttle valve opening is fully closed). If the throttle valve opening (TVO) is 0/8, the routine proceeds to a Step 101. In the step 101, it is determined whether the signal from the brake switch (BRK SW) 42 is ON indicating the brake pedal is depressed. The vehicle at this point is stationary and the speed is 0 km/h as shown in FIG. 3.

The secondary pressure (Psec) detected by the secondary hydraulic pressure sensor 41 and the primary pressure (Ppri) detected by the primary hydraulic pressure sensor 40 when the brake state is ON are denoted by Psec0 and Ppri0 respectively.

In a step 102, it is determined whether the signal from the brake switch (BRK SW) 42 is OFF indicating that the brake is released. The time when the brake release is detected is denoted by t1. When the brake is released, the vehicle starts to move backward gradually with an increasing vehicle speed as shown in FIG. 3.

In a step 103, it is determined whether a time period for preventing erroneous detection due to an inertial torque correction has passed from the time t1 when the brake was released.

The CVT control unit 1 performs inertial torque correction to increase the primary pressure and the secondary pressure so as to prevent a V-belt slippage due to the inertial torque when the vehicle speed is equal to or higher than a predetermined speed while the brake is ON. Accordingly, at the time t1 when the brake state changes from ON to OFF, the inertial torque correction stops and a decrease of primary pressure and secondary pressure occurs. To avoid detecting this decrease of hydraulic pressure, the detection of a reverse torque input to a belt-CVT is started from time t2 when the time period for preventing erroneous detection has elapsed. In FIG. 3, no inertial torque correction is performed because the vehicle speed is below the predetermined speed, and no decrease of the hydraulic pressure occurs at the time t1 to the primary pressure and the secondary pressure.

When it is determined in the step 103 that the time period for preventing erroneous detection has elapsed, the CVT control unit 1 starts in a step 104 the process of reverse torque input detection. The reverse torque input detection is performed by determining whether the primary pressure (Ppri) and the secondary pressure (Psec) satisfy the following equations:

$$Psec > psec0 - \Delta Psec \qquad (1)$$

$$Ppri \leqq Ppri0 - \Delta Ppri \qquad (2)$$

where $\Delta Ppri$ is 0.1Mpa for example.

When there is a reverse torque input to a belt-CVT, the hydraulic pressure balance between the primary pressure and the secondary pressure is lost and in time the equations (1) and (2) will be satisfied. Accordingly, it is possible to determine the presence of a reverse torque input to a belt-CVT by examining whether the primary pressure and the secondary pressure satisfy the equations (1) and (2).

If the pressure relationship of the equations (1) and (2) is determined to be met through the steps 104 and 105, the process proceeds to a step 106 and a reverse torque input to the belt-CVT is determined to have been detected at time tX when the relationship of the primary pressure (Ppri) and the secondary pressure (Psec) was as described in equations (1) and (2). Subsequently in a step 107, the primary pressure is raised to prevent the decrease of torque capacity.

On the other hand, if the secondary pressure is determined not to satisfy the pressure relationship of the equation (1) in the step 104, the process returns to the step 100.

If the primary pressure is determined not to satisfy the pressure relationship of the equation (2) in the step 105, the process proceeds to a step 108. In the step 108, it is determined whether a predetermined duration of time for terminating the reverse torque detection process has elapsed from the time t2, which is the start of the detection process. If the specified time has not elapsed, the process returns to the step 104 and the reverse torque input detection process is resumed. If the specified time is determined to have elapsed, the process returns to the step 100 and the aforementioned steps are repeated.

FIG. 4 is a timing diagram showing the changes of the primary pressure and the secondary pressure when a vehicle is on a flat road.

The accelerator pedal is not depressed by the driver of the vehicle, and the vehicle is running while decelerating. Consequently, the throttle opening sensor 5 detects 0/8. The brake state is ON between time t0 and time t1, and the brake switch (BRK SW) 42 detects ON.

Between the time t0 and the time t1, the primary pressure and the secondary pressure are raised by the inertial torque correction. The primary pressure and the secondary pressure when the brake state is ON are denoted by Ppri0 and Psec0 respectively.

At the time t1 when the brake state changes to OFF, the inertial torque correction is stopped and the primary pressure and the secondary pressure start to decrease. Furthermore, after the time t1, the vehicle speed gradually increases due to creeping.

The process of reverse torque input detection is started from the time t2 when the time period for preventing erroneous detection due to inertial torque correction has elapsed from the time t1 when the brake was released. On a flat road, both the secondary pressure and the primary pressure decrease and the aforementioned pressure relationship between the secondary pressure and the primary pressure is not met. Consequently, the CVT control unit 1 determines that there is no reverse torque input to the belt-CVT.

Thus, starting at the time t2 when the time period for preventing erroneous detection has elapsed from the time t1 when the brake was released, the CVT control unit 1 can detect a reverse torque input to a belt-CVT by monitoring the changes of the secondary pressure and the primary pressure and determining whether they satisfy the pressure relationship defined by the equations (1) and (2).

In this embodiment, steps 104 to 106 constitute the reverse torque input detection means of the present invention.

This embodiment is structured as described above and the process of a reverse torque input detection starts at the time t2 when the time period for preventing erroneous detection has elapsed from the time t1 when the brake state changed from ON to OFF while the throttle valve opening was 0/8. The CVT control unit 1 determines the detection of a reverse torque input when the secondary pressure and the primary pressure satisfy the specified pressure relationship.

Thus, a reverse torque input to a belt-CVT can be detected from measuring the pressure changes of the primary pressure and the secondary pressure using the primary hydraulic pressure sensor 40 and the secondary hydraulic pressure sensor 41 which are conventionally used for the feedback control of the primary and secondary pressure. Consequently, a pair of revolution sensors conventionally used is no longer required, and a cost reduction becomes possible.

Furthermore, the reverse torque input detection process starts after the time period for preventing erroneous detection has elapsed from the time t1 when the brake state changed from ON to OFF while the throttle valve opening is 0/8; thereby the reverse torque input detection process is prevented from detecting and determining erroneously a reverse torque input from the decrease of hydraulic pressure caused by ending the inertial torque correction on the primary and the secondary pressure.

**Claims**

1.  A reverse torque input detection system for a V-belt type continuously variable transmission in which primary pressure is applied to a primary pulley connected to an engine side and secondary pressure is applied to a secondary pulley connected to an output shaft, comprising:

    a brake sensor to detect a brake state being ON or OFF;
    a throttle opening sensor to detect a throttle valve opening;
    a primary hydraulic pressure sensor to detect said primary pressure;
    a secondary hydraulic pressure sensor to detect said secondary pressure; and
    reverse torque input detection means for detecting a reverse torque input to said output shaft,

    wherein said reverse torque input detection means determines the presence of a reverse torque input to said output shaft,
    after said throttle opening sensor detects a throttle valve fully closed and said brake sensor detects said brake state changed from ON to OFF,
    when said primary pressure is equal to or lower, by a predetermined value, than said primary pressure detected when said brake sensor detected said brake state being ON, and
    said secondary pressure is hi gher, by a predetermined value, than said secondary pressure detected when said brake sensor detected said brake state being ON.

2.  A reverse torque input detection system for a V-belt type continuously variable transmission according to claim 1,

    wherein said reverse torque input detection means perform the detection of a reverse torque input to said output shaft, after a specified period of time has elapsed since said brake sensor detected said brake state changed from ON to OFF.

3.  A system for detecting an opposite direction torque acting on an output shaft of a continuously variable transmission that comprises a primary pulley (16) that, in use, is connected with an engine, a secondary pulley (26) that, in use, is connected with said output shaft and a belt (24) connecting said pulleys, said pulleys being respectively actuated by a primary pressurised fluid and a secondary pressurised fluid and said system comprising first pressure sensing means (40) for providing a signal indicative of the pressure of said primary pressurised fluid, a second pressure sensing means (41) for providing a signal indicative of the pressure of said secondary pressurised fluid and means (1) for determining a said opposite direction torque based on said indications of said pressures of said primary and secondary pressurised fluids, said determining means determining the presence of a said opposite direction torque when a predetermined pressure relationship is found.

4.  A method of detecting an opposite direction torque acting on an output shaft of a continuously variable transmission that comprises a primary pulley (16) which, in use, is connected with an engine and a secondary pulley (26) which, in use, is connected with said output shaft, said pulleys being connected by a belt (24) and being respectively actuated by a primary pressurised fluid and a secondary pressurised fluid, said method comprising analysing respective signals indicative of the pressure of the primary pressurised fluid and the pressure of the secondary fluid and determining the presence of a said opposite direction torque when said analysing step indicates a predetermined pressure relationship.

5.  A method as claimed in claim 4, wherein said predetermined pressure relationship comprises respective pressure conditions for said primary pressure fluid and said secondary pressurised fluid.

6.  A computer product comprising one or more computer program software portions which, when executed in an execution environment, are operable to implement one or more of the steps of claim 4 or 5.

7.  A data storage medium having at least one of said computer software portions of claim 6 stored thereon.

8.  A microcomputer provided with a data storage medium as claimed in claim 7.

# Fig.1

## Fig.2

```
              ┌──────────┐
              │  START   │
              └──────────┘
                   │
        100        ▼
         ╲    ╱─────────╲      NO
          ──◀  TVO = 0/8  ▶────┐
              ╲    ?    ╱      │
               ╲──────╱        │
                   │YES        │
        101        ▼           │
         ╲    ╱─────────╲  NO  │
          ──◀  BRK SW    ▶─────┤
              ╲  ON?    ╱      │
               ╲──────╱        │
                   │YES        │
        102        ▼           │
         ╲    ╱─────────╲  NO  │
          ──◀  BRK SW    ▶─────┤
              ╲  OFF?   ╱      │
               ╲──────╱        │
                   │YES        │
        103        ▼           │
         ╲   ╱──────────────╲  │
          ──◀  Time Period   ▶─┘
             ╱for Preventing╲  NO
             ╲ Erroneous   ╱
              ╲Detection   ╱
               ╲elapsed ? ╱
                ╲────────╱
                   │YES
        104        ▼
         ╲   ╱──────────────╲
     NO   ──◀ Psec > Psec0   ▶───┐
     ┌────   ╲  -ΔPsec ?    ╱    │
     │        ╲────────────╱     │
     │            │YES           │
     │   105      ▼              │
     │    ╲  ╱─────────────╲  NO │
     │     ─◀ Ppri ≦ Ppri0  ▶────┤
     │       ╲  -ΔPpri ?  ╱      │
     │        ╲─────────╱        │
     │            │YES      108  ▼
     │   106      ▼        ╱──────────╲  NO
     │  ┌──────────────┐  ◀Predetermined▶──┐
     │  │Reverse Torque│   ╲Time elapsed╱  │
     │  │Input detected│    ╲    ?    ╱    │
     │  └──────────────┘     ╲──────╱      │
     │   107      │            │YES        │
     │  ┌──────────────┐       │           │
     │  │Raise Primary │       │           │
     │  │  Pressure    │       │           │
     │  └──────────────┘       │           │
     │            │            │           │
     └────────────┴────────────┴───────────┘
                   │
                   ▼
              ┌──────────┐
              │  RETURN  │
              └──────────┘
```

## Fig.3

## Fig.4